# EUROPÄISCHE PATENTSCHRIFT

(11) **EP 0 771 955 B1**
(45) Veröffentlichungstag und Bekanntmachung des Hinweises auf die Patenterteilung: **22.12.1999**
(21) Anmeldenummer: 96810691.4
(22) Anmeldetag: 14.10.1996
(51) Int. Cl.: F16B 39/10

(54) **Schraubensicherung**
Screw locking device
Dispositif de sécurité pour vis

(30) Priorität: 02.11.1995 DE 19540743
(43) Veröffentlichungstag der Anmeldung: 07.05.1997
(73) Patentinhaber: ASEA BROWN BOVERI AG, 5400 Baden (CH)
(72) Erfinder: Regnath, Günter, 79790 Küssaberg (DE); Senn, Herbert, 79798 Jestetten (DE)
(74) Vertreter: Kaiser, Helmut, Dr.

(56) Entgegenhaltungen:
- DE-C- 44 700
- FR-A- 2 604 496

## Beschreibung

### TECHNISCHES GEBIET

Die Erfindung betrifft eine Schraubensicherung, wie sie im Oberbegriff des Anspruchs beschrieben ist.

### STAND DER TECHNIK

Bei einer fest angezogenen Schraube liegen die Gewindegänge einseitig an. Da Schrauben selbsthemmend sind, verhindert die an der Gewindeanlagefläche auftretende Reibung das Lösen. Wird die Vorspannung infolge von Schlupf gleich Null, so hört die Anpressung im Gewinde auf, und die Schraube kann sich lösen. Bei Stössen und Schwingungen kann diese Grenze erreicht werden. Für diesen Fall verwendet man bei Schraubenverbindungen Sicherungselemente, die den Punkt der Grenzverschiebung, der bei Überschreitung der Biegewiderstände der Schraube (Schlupf) eintritt, soweit erhöht, dass er unter den Bedingungen der Praxis nicht mehr überschritten wird. Losdrehsicherungen verhindern jegliches selbständiges Lösen und erhalten über 80% der Vorspannkraft. Entsprechend den unterschiedlichen Anforderungen am Einsatzort, werden verschiedene Losdrehsicherungen eingesetzt. Dabei umfassen diese Anforderungen sowohl die dynamischen und thermischen Belastungen als auch die daraus erwachsenen Bedingungen für die Materialwahl der zu verspannenden Bauteile und der Schraubenverbindung.
So sind beispielsweise Sperrzahnschrauben und -muttern nur dort einsetzbar, wo hoch vorgespannte Schraubenverbindungen überwiegend senkrecht zur Schraubenachse beansprucht werden und keine gehärteten Oberflächen der zu verspannenden Bauteile vorhanden sind.
Dagegen ist mikroverkapselter Klebstoff auch bei gehärteten Oberflächen anwendbar. Hier schränkt allerdings die Temperaturgrenze des verwendeten Klebstoffs den Anwendungsbereich ein und es ist zu beachten, dass während der Montage die Klebeflächen fettfrei sind.
Desweiteren kommen formschlüssige, mitverspannte Scheiben mit Lappen oder Aussennasen als Losdrehsicherungen zum Einsatz.
Ihr Einsatzbereich ist begrenzt auf untere Festigkeitsklassen von Schrauben.
Auch nicht lösbare Losdrehsicherungen in Form von
Schweisspunkten oder -raupen gelangen zur Anwendung. Hierbei werden die Köpfe der vorgespannten Schrauben direkt mit dem verspannten Bauteil verschweisst. Eine Voraussetzung für die Anwendung dieser Sicherung ist die Schweissbarkeit der verwendeten Schrauben- und Bauteilmaterialien. Gewöhnlich sind nur nicht hochfeste Legierungen schweissbar unter Raumbedingungen. Hochfeste Legierungen hingegen sind meist nur schlecht schweissbar unter Berücksichtigung kosten- und zeitintensiver Aufwendungen für spezielle Schweissbedingungen, Vorwärm- und Abkühlvorgänge. Diese Aufwendungen sind besonders dann nötig, wenn aufgrund der dynamischen und thermischen Betriebszustände sowohl die zu verspannenden Bauteile als auch die Schraubenverbindung aus hochfestem, schlecht schweissbarem Material bestehen.
Vergleichsweise einfacher ist die Sicherung schweissbarer Schrauben an schlecht schweissbaren Bauteilen, falls die Betriebszustände den Einsatz solcher Schrauben erlauben. In diesem Fall wird eine am Bauteil formschlüssige, schweissbare Scheibe mitverspannt, und anschliessend mit dem Schraubenkopf verschweisst.

### DARSTELLUNG DER ERFINDUNG

Der Erfindung liegt die Aufgabe zugrunde, eine Schraubensicherung der eingangs genannten Art dahingehend weiterzuentwickeln, dass mit ihr schlecht oder nicht schweissbare Schrauben und Grundwerkstoffe in einfacher und wirtschaftlicher Weise nicht lösbar gesichert werden können.

Erfindungsgemäss wird diese Aufgabe durch die Merkmale des Anspruchs gelöst.

Die Vorteile der Erfindung sind unter anderem darin zu sehen, dass ein Entfernen der Schraubensicherung möglich ist, wobei weder die Schraubenverbindung noch die verspannten Bauteile Schaden nehmen. Dieser Vorteil ist besonders bei Verwendung hochfester und damit vergleichsweise teurer Legierungen bedeutungsvoll.

### KURZE BESCHREIBUNG DER ZEICHNUNG

In der Zeichnung ist ein Ausführungsbeispiel der Erfindung schematisch dargestellt.
Es zeigen:
- Fig. 1: einen Längsschnitt durch eine Schraubenverbindung mit einer nicht lösbaren Schraubensicherung;
- Fig.2: eine Draufsicht auf die Schraubensicherung.

Es sind nur die für das Verständnis der Erfindung wesentlichen Elemente gezeigt.

### WEG ZUR AUSFÜHRUNG DER ERFINDUNG

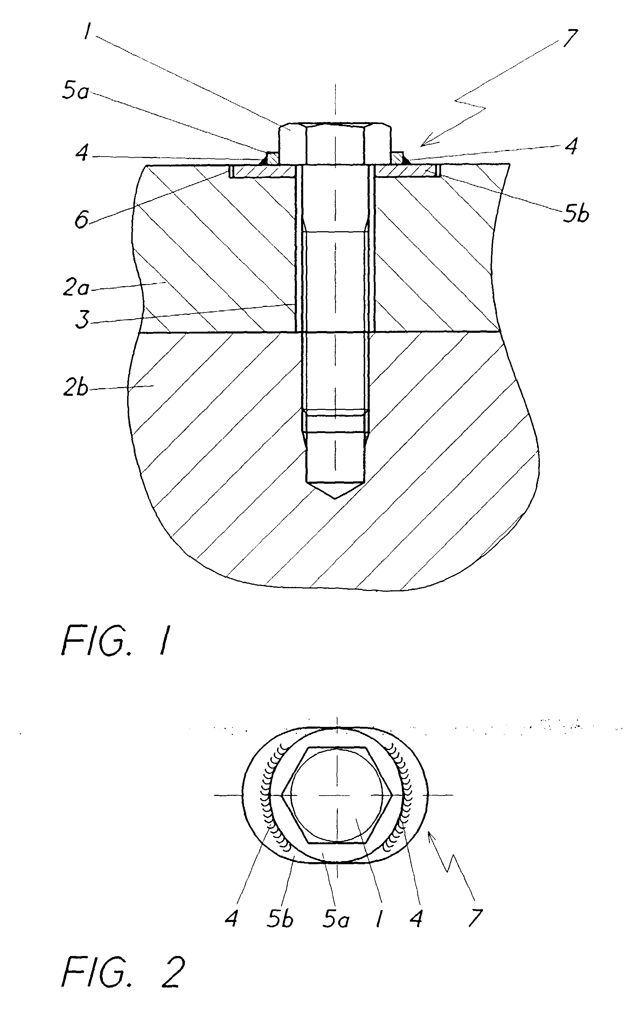

In Fig. 1 bezeichnet 1 eine Schraube mit einem Aussensechskant, die ein erstes Bauteil 2a mit einem zweiten Bauteil 2b verspannt, und welche mit einer Schraubensicherung 7 nicht lösbar gesichert ist. Die Schraube 1 ist in einer Bohrung 3 des ersten Bauteil geführt, und mit dem zweiten Bauteil 2b verschraubt ist. Zwischen dem Kopf der Schraube 1 und dem ersten Bauteil 2a ist in einer Nut 6 eine ovale Scheibe 5b eingelegt und mitverspannt. Diese Anordnung verdeutlicht Fig. 2 in einer Draufsicht auf den Schraubenkopf. Dieser Schraubenkopf mit Aussensechskant wird nach dem Verspannen von einem Sicherungsring 5a, welcher einen Innensechskant aufweist, umgeben. Beide wesentlichen Bestandteile 5a, 5b der Schraubensicherung 7 bestehen aus einem leicht unter Raumbedingungen schweissbaren Material. Sie werden nicht lösbar durch Schweissraupen 4 miteinander verschweisst, und sichern somit die Schraube 1 gegen jegliches Lösen.

Die so geschaffene Schraubensicherung 7 stellt eine Kombination aus den Sicherungsarten formschlüssig und nicht lösbar dar. Die ovale Scheibe 5b ist formschlüssig am ersten Bauteil 2a angeordnet, der Sicherungsring 5a ist ebenfalls formschlüssig mit der Schraube 1 verbunden, und die ovale Scheibe 5b und der Sicherungsring 5a sind nicht lösbar verschweisst.

Anwendung findet diese Art von Schraubensicherung 7 überall dort, wo die auftretenden Betriebsbedingungen eine spezielle Materialwahl für die zu verspannenden Bauteile 2a, 2b und für die Schraube 1 erfordern. So bedingen beispielsweise hohe Temperaturen und mechanische Vibrationen mit Torsions- und Schubbeanspruchung für eine Schraubenverbindung bei gleichzeitig auftretenden Schwankungen der Zustandsgrössen die Verwendung hochfester Metallegierungen sowohl für die zu verspannenden Bauteile 2a, 2b wie für die Schraube 1. Diese hochfesten Metallegierungen sind in der Regel nur mit grossem, vergleichsweise teurem Aufwand unter atmosphärischen Bedingungen schweissbar. Für die erfindungsgemässe Schraubensicherung 7 werden Metallegierugen verwendet, die einfach und damit preiswert unter Raumbedingungen schweissbar sind.

Somit werden durch die beschriebene Kombination verschiedener Metallegierungen, die geforderte hohe Festigkeit der Bauteile 2a, 2b und der Schraube 1 mit den geschätzten Eigenschaften einer nicht lösbaren Schraubensicherung 7 unter Berücksichtigung der Wirtschaftlichkeit verbunden.
Ein weiterer Vorteil ist, dass bei einem Öffnen der Schraubensicherung 7 an der Schweissraupe 4 weder ein Bauteil 2a, 2b noch die Schraube beschädigt wird.

Selbstverständlich ist die Erfindung nicht auf das gezeigte und beschriebene Ausführungsbeispiel beschränkt. So ist die nicht lösbare Schraubensicherung 7 beispielsweise auch an allen zu verspannenden Bauteilen 2a, 2b und Schrauben 1 einsetzbar, die aus nicht schweissbaren Materialien gefertigt sind. Ebenfalls denkbar im Sinn der Erfindung ist ein Schraubenkopf mit einem Innensechskant und eine entsprechende, mit dem Schraubenkopf formschlüssige Sicherung 5a, die mit der am Gehäuse formschlüssig angeordneten Scheibe 5b verschweisst wird.

### BEZUGSZEICHENLISTE

- 1: Schraube
- 2a: erstes Bauteil
- 2b: zweites Bauteil
- 3: Bohrung
- 4: Schweissraupe
- 5a: Sicherungsring
- 5b: ovale Scheibe
- 6: Nut
- 7: Schraubensicherung

## Patentansprüche

1. Schraubensicherung für eine Schraube (1), mit der ein erstes Bauteil (2a) und ein zweites Bauteil (2b) verspannt ist, dadurch gekennzeichnet,
- dass eine Unterlagsscheibe (5b) formschlüssig an dem ersten Bauteil (2a) anliegt, und mit dem Kopf der Schraube (1) an diesem ersten Bauteil (2a) verspannt ist,
- dass eine Sicherungsscheibe (5a) am Kopf der Schraube (1) formschlüssig angreift, und
- dass die Sicherungscheibe (5a) mit der Unterlagsscheibe (5b) mittels einer Schweissraupe (4) verbunden ist.

## Claims

1. Screw retention device for a screw (1) by means of which a first component (2a) and a second component (2b) is [sic] braced, characterized
- in that a plain washer (5b) bears positively on the first component (2a) and is braced by means of the head of the screw (1) on this first component (2a),
- in that a retaining washer (5a) engages positively on the head of the screw (1), and
- in that the retaining washer (5a) is connected to the plain washer (5b) by means of a welding bead (4).

## Revendications

1. Dispositif de sécurité pour une vis (1), avec laquelle un premier élément de construction (2a) et un second élément de construction (2b) sont assemblés,
caractérisé en ce que
- une rondelle d'appui (5b) est posée en calage géométrique sur le premier élément de construction (2a) et est assemblée avec la tête de la vis (1) à ce premier élément de construction (2a), en ce que
- une rondelle de sécurité (5a) est calée géométriquement sur la tête de la vis (1), et en ce que
- la rondelle de sécurité (5a) est assemblée à la rondelle d'appui (5b) au moyen d'un cordon de soudure (4).
